# EUROPEAN PATENT SPECIFICATION

(11) **EP 0 608 303 B1**
(45) Date of publication and mention of the grant of the patent: **23.04.1997**
(21) Application number: 92921418.7
(22) Date of filing: 19.10.1992
(51) Int. Cl.: B60R 21/20

(54) **VEHICLE AIR-BAG COVER PLATE**
ABDECKPLATTE FÜR EINEN AIR-BAG EINES FAHRZEUGES
COUVERCLE POUR AIRBAG DE VEHICULE

(30) Priority: 23.10.1991 GB 9122487
(43) Date of publication of application: 03.08.1994
(73) Proprietor: Rolls-Royce Motor Cars Limited, Crewe Cheshire CW1 3PL (GB)
(72) Inventor: CARMAN, John, Wrexham LL12 8NQ (GB); GIBSON, Karl, Robert, Crewe CW2 5ES (GB)
(74) Representative: Downey, William Gerrard
(86) International application number: GB9201918
(87) International publication number: WO9308043

(56) References cited:
- EP-A- 0 358 230
- EP-A- 0 397 154
- GB-A- 2 236 082
- US-A- 4 327 937
- US-A- 4 770 439
- US-A- 4 925 209

## Description

The present invention relates to a cover plate for a housing for an air bag impact protection system for a vehicle and to a system and vehicle incorporating such a plate.

Air-bag impact protection systems for vehicles are known. Examples of known systems are described in the specifications of U.S. Patent No. 4,770,439 and U.K. Patent Application Nos. 2,239,220 and 2,239,221. In the system described in the specification of the latter application, the air-bag is housed in a deflated condition in a cavity. The cavity is closed off by a cover comprising side walls and a canopy. The cover comprises a synthetic resin, a multi-piece reinforcing network member and plastic deformation members. The cover has a tear-line along which it cleaves into two halves when the air-bag is operated. The two halves deform out of the way of the bag so as not to inhibit inflation of the bag. The purpose of the plastic deformation members is to maintain the two halves of the cover in the deformed state so that they do not interfere with the bag after inflation. This is a complicated and expensive construction. EP-A-0397154 and EP-A-0358230 also describe air-bag system cover plates. In EP-A-0358230, the cover is rigid and may interfere with the operation of bag. In EP-A-0397154, which comprises the features of the preamble of claim 1, the cover comprises a net insert covered by a layer of a soft synthetic resin and connected to a base insert by means of an attaching plate. This is a relatively complicated arrangement which may not support conventional automobile instrument panel decoration such as a real wood veneer.

According to the present invention, there is an air-bag housing cover for an air-bag impact protection system for a vehicle which cover is capable of deforming under the action of an inflatable air-bag and remaining in the deformed position so as not to interfere with the operation of the bag, the cover comprising a substrate made of an inherently deformable material and a superposed layer also made of an inherently deformable material characterised in that the substrate is of metal and extends over the full extent of the cover and the inherent deformability of the cover is such that the cover deforms upon impingement of a midsection of the cover on a protrusion of the dashboard of the vehicle and remains in the deformed state so as not to interfere with the inflated air-bag.

In a preferred embodiment of the invention, the cover is pressed from a metal. The metal may be aluminium. A suitable aluminium is 1200 Grade O to BS 1470 with a tensile strength in the range 70 to 105 N/mm² and a minimum percentage elongation of 25%. The cover may be retained at one edge to enable it to pivot away on deployment of the air-bag. Edge flanges may be provided to stiffen the cover. A retention bracket may be attached at the cover by any suitable means such as, for example, welding. The retention bracket may itself be made of a deformable material so that it deforms with the cover on deployment of the bag. Decoration may be provided on the cover either directly or by providing a superposed layer. The superposed layer may be a natural or real wood veneer.

In order that the invention may be more clearly understood, one embodiment thereof will now be described by way of example with reference to the accompanying drawings, in which:-
Figure 1a shows a diagrammatic cross sectional partial view of an air-bag impact protection system for vehicle occupants,
Figure 1b is a diagrammatic view of the system of Figure 1a showing the air-bag inflated,
Figure 2 is a perspective view of a cover plate forming part of the system of Figures 1a and 1b, and
Figure 3 is a more detailed sectional view of the cover plate showing the plate in position before actuation of the air-bag.

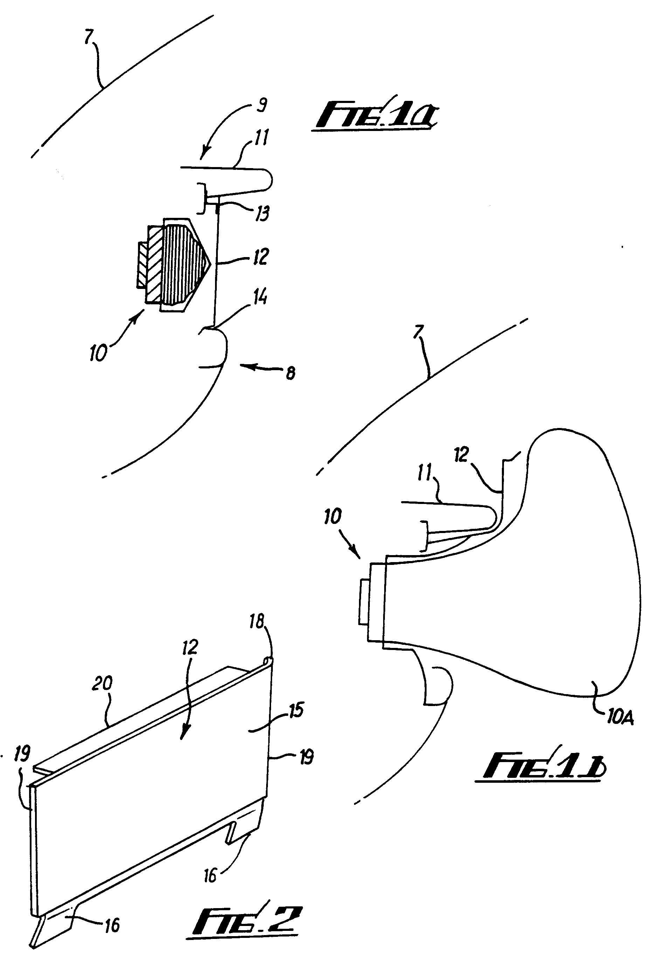

Referring to Figures 1a and 1b of the drawings, a typical instrument panel section for a vehicle is generally and diagrammatically shown. The front facia of the panel section is indicated generally by the reference numeral 8 and the top below the base of the windscreen 7 by the reference numeral 9. The air-bag module, which is of conventional construction and is indicated by the reference numeral 10, is housed in a cavity within the instrument panel section. The front of this cavity is closed off by a cover 12 in the form of a plate or flap. As this cover will be clearly visible to occupants of the passenger compartment, in the case of an automobile, this cover will usually be of pleasing appearance. It may, for example, be veneered.

The cover 12 is made of a deformable metal. This may be aluminium. The deformability characteristics of the material are such that the cover should be able to adopt and maintain a deformed shape and position as shown in Figure 1b so that it does not interfere with the inflation of the bag 10A or the inflated bag. Where the cover is provided with a decorative appearance, such as a veneer as mentioned above, the deformability of the decoration must be matched to that of the basic material of the cover. A veneer, for example, must possess sufficient rigidity to stick to the basic cover but sufficient flexibility to remain coherent with the cover in the event that the air-bag is deployed.

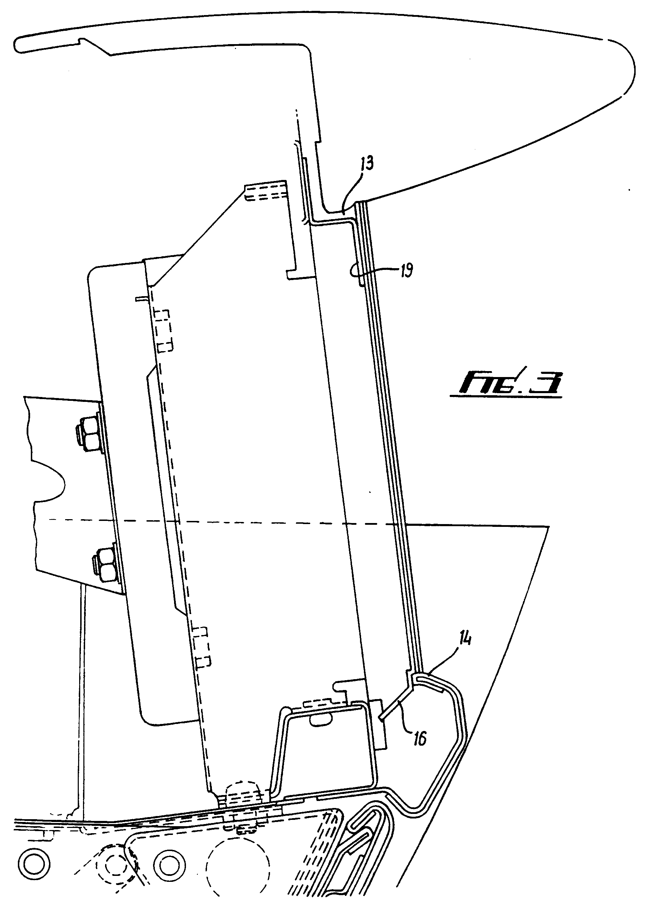

The cover 12, which may be made from a single pressing is shown in more detail in Figures 2 and 3 of the drawings. Referring particularly to Figure 2, the cover 12 comprises a plate 15 having downwardly dependent lugs 16. These lugs form part of a frictional restraint at the lower end 14 of the cover. The lateral edges 15 of the plate are bent over at right angles to the plane of the plate to form flanges 19 which provide stiffening for the plate. A right angled retention bracket 20 is attached to the upper edge of the plate 15. Attachment may be by welding or any other suitable means. The material of the retention bracket should be such as to allow deformation in addition to deformation of the plate on operation of the air-bag.

On operation of the air-bag, usually under collision conditions of the vehicle in which the air-bag is disposed, the bag inflates out of its module 10. On inflation, it pushes the cover 12 upwardly against the upper part 11 of the instrument panel section deforming the cover and perhaps also the retention bracket attached to the cover about this part of the panel section as shown in Figure 1b. The material of the cover, whether incorporating a decorative surface member such as a wooden veneer or not, maintains the deformed position shown in Figure 1b and therefore does not interfere with the inflated bag. The simplicity of the arrangement facilitates the prediction and provision of predetermined deformation characteristics than would be the case with a much more complex structure. This single plate arrangement also facilitates the provision of decorative surface effects thereon whether directly or by the addition of a further layer such as a wooden veneer as described above.

## Claims

1. An air-bag housing cover for an air-bag impact protection system for a vehicle which cover is capable of deforming under the action of an inflatable air-bag (1) and remaining in the deformed position so as not to interfere with the operation of the bag, the cover comprising a substrate (15) made of an inherently deformable material and a superposed layer also made of an inherently deformable material characterised in that the substrate (15) is of metal and extends over the full extent of the cover and the inherent deformability of the cover is such that the cover deforms upon impingement of a midsection of the cover on a protrusion of the dashboard of the vehicle and remains in the deformed state so as not to interfere with the inflated air-bag.

2. A cover as claimed in claim 1, having edge flanges (19) for stiffening.

3. A cover as claimed in claim 1 or 2, which is retained at one edge to enable it to pivot away on operation of the bag.

4. A cover as claimed in claim 3, comprising a retention bracket (20) connected thereto.

5. A cover as claimed in claim 4, in which the retention bracket (20) is made of a deformable material.

## Patentansprüche

1. Abdeckplatte für das Air-Bag-Gehäuse eines Air-Bag-Aufprall-Schutzsystems für ein Fahrzeug, wobei die Abdeckplatte in der Lage ist, sich unter der Wirkung eines sich aufblasenden Air-Bags (1) zu deformieren und in der deformierten Lage zu verbleiben, um die Arbeitsweise des Air-Bags nicht zu stören, wobei die Abdeckplatte aus einem Substrat (15) aus einem von Natur aus deformierbaren Material besteht und eine darübergefügte Schicht trägt, die ebenfalls aus einem von Natur aus deformierbaren Material hergestellt ist, dadurch gekennzeichnet, daß das Substrat (15) Metall ist und sich über die volle Erstreckung der Abdeckplatte erstreckt, und daß die von Natur aus gegebene Deformationsfähigkeit der Abdeckplatte derart ist, daß sich die Abdeckplatte beim Auftreffen eines Mittelabschnitts der Abdeckplatte auf einen Vorsprung des Armaturenbretts des Fahrzeugs deformiert und in der deformierten Lage verbleibt, so daß eine Störung des sich entfaltenden oder entfalteten Air-Bags nicht erfolgt.

2. Abdeckplatte nach Anspruch 1, welche zur Versteifung Randflansche (19) aufweist.

3. Abdeckplatte nach Anspruch 1 oder 2, die an einem Rand zurückgehalten wird, um eine Abschwenkung bei Auslösung des Air-Bags zu ermöglichen.

4. Abdeckplatte nach Anspruch 3, welche einen Haltearm (20) besitzt, der hiermit verbunden ist.

5. Abdeckplatte nach Anspruch 4, bei welcher der Haltearm (20) aus einem deformierbaren Material hergestellt ist.

## Revendications

1. Couvercle de carter de sac gonflable pour un système de protection par sac gonflable contre les chocs pour véhicule, le couvercle étant susceptible de se déformer sous l'action du gonflage d'un sac gonflable (1) et de rester dans la position déformée, de manière à ne pas interférer avec le fonctionnement du sac, le couvercle comprenant un substrat (15) constitué d'un matériau intrinsèquement déformable et d'une couche superposée également constituée d'un matériau intrinsèquement déformable, caractérisé par le fait que le substrat (15) est métallique et s'étend sur toute l'étendue du couvercle, et la capacité de déformation intrinsèque du couvercle étant telle que ce couvercle se déforme lors d'un choc sur une section médiane du couvercle sur une saillie du tableau de bord du véhicule et reste à l'état déformé, de manière à ne pas interférer avec le sac gonflable alors gonflé.

2. Couvercle selon la revendication 1, comportant des rabats de bordure (19) destinés à sa rigidification.

3. Couvercle selon la revendication 1 ou 2, retenu sur un bord de manière à lui permettre de s'écarter par pivotement lors du fonctionnement du sac.

4. Couvercle selon la revendication 3, comprenant une patte de rétention (20) qui lui est reliée.

5. Couvercle selon la revendication 4, dans laquelle la patte de rétention (20) est constituée d'un matériau déformable.
